# Europäisches Patentamt

(19) **European Patent Office**

**Office européen des brevets**

(11) Numéro de publication: **0 077 730**
**B1**

(12) **FASCICULE DE BREVET EUROPEEN**

(45) Date de publication du fascicule du brevet:
29.05.85

(51) Int. Cl.⁴: **G 01 B 7/12**, G 01 B 7/28

(21) Numéro de dépôt: **82401894.9**

(22) Date de dépôt: **15.10.82**

(54) Procédé et dispositif de détermination de la forme de la paroi interne d'un tube.

(30) Priorité: 16.10.81 FR 8119480

(43) Date de publication de la demande:
27.04.83 Bulletin 83/17

(45) Mention de la délivrance du brevet:
29.05.85 Bulletin 85/22

(84) Etats contractants désignés:
**BE DE GB IT NL**

(56) Documents cités:
**FR - A - 2 052 658**
**FR - A - 2 111 411**
**FR - A - 2 429 994**
**US - A - 3 641 678**
**US - A - 4 021 925**

(73) Titulaire: **FRAMATOME ET CIE., Tour Fiat 1, Place de la Coupole, F-92400 Courbevoie (FR)**

(72) Inventeur: **Mainy, Pierre, 34 avenue de l'Aubépin, F-71100 Chalon-sur-Saone (FR)**
Inventeur: **Rigolot, Claude, 37 rue des Lieutenants Chauveau, F-71100 Chalon-sur-Saone (FR)**
Inventeur: **Fournier, Yves, 26 avenue Locaille d'Esse, F-71530 Chatenoy-le-Royal (FR)**

(74) Mandataire: **Bressand, Georges et al, c/o CABINET LAVOIX 2 Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention concerne un procédé et un dispositif de détermination de la forme de la paroi interne d'un tube, notamment au niveau d'une soudure.

Il existe dans l'industrie de nombreux dispositifs comprenant des tubes soumis à des contraintes mécaniques importantes. Il en est par exemple ainsi des tubes constituant le circuit eau-vapeur des générateurs de vapeur du type sodium-eau. Dans de tels générateurs de vapeur, les tubes sont disposés en faisceaux relativement denses, comportent de nombreuse soudures ainsi que divers coudes et sont soumis à des contraintes thermiques relativement grandes. La vérification de l'état des tubes, notamment au niveau des soudures, peut être par conséquent une opération relativement délicate à effectuer sur des installations en cours de fabrication ou lors de la maintenance.

Comme l'examen visuel de la forme extérieure d'un tube n'est pas suffisant pour être sûr de la qualité d'une soudure, il a été déjà proposé d'effectuer des examens par rayons X, mais ceux-ci ne permettent que la vérification de la compacité de la soudre, c'est-à-dire permettent de vérifier que la soudure ne comporte pas de fissures internes. Par un examen aux rayons X on ne peut guère déterminer avec précision la forme extérieure de la soudure. Par ailleurs, il est parfois impossible d'amener des appareils radiographiques, vu leur encombrement, au niveau du tube à vérifier lorsque celui-ci est déjà monté dans une installation. Il est aussi connu de l'art antérieur (US-A-3 641 678 et US-A-4 021 925) un procède suivant lequel la détermination de la forme de la paroi interne d'un tube est effectuée grâce à un palpeur en déplacement continu et longitudinal par rapport à l'axe du tube et en rotation autour de cet axe.

Pour ces raisons la demanderesse a été amenée à imaginer un nouveau procédé de détermination de la forme de la paroi interne d'un tube, basé sur le principe d'une analyse dimentionnelle directe de cette paroi interne à l'aide d'un appareil que l'on peut introduire par une extrémité du tube et que l'on peut amener, sur des distances parfois assez longues, au niveau exact de la partie du tube que l'on veut contrôler.

La détermination de la forme de la paroi interne du tube doit pouvoir permettre, dans certains cas, la détermination et éventuellement le tracé du contour du tube selon toute section établie dans un plan longitudinal ou radial du tube. Elle doit pouvoir en conséquence permettre de définir toutes les caractéristiques dimentionnelles du tube, par exemple, son diamètre moyen, son degré d'ovalisation ou de déformation. Des mesures seccussives effectuées selon l'invention au cours de la vie du tube pouvant donner, par exemple, son usure interne par oxydation, son agrandissement du fait de la pression qui règne à l'intérieur du tube lors de son utilisation, sa déformation due aux supports, etc.

La présente invention a pour objet le procédé tel que défini et décrit dans la revendication 1.

La présente invention a aussi pour objet le dispositif tel que défini et décrit dans la revendication 2.

Le dispositif conforme à la présente invention peut être utilisé pour déterminer la forme de la paroi intérieure d'un tube, non seulement au niveau d'une soudure mais aussi en n'importe quel point du tube dont on veut déterminer la forme géométrique, par exemple afin de vérifier qu'il n'a pas été soumis à des contraintes mécaniques anormales ou à une corrosion.

D'autres avantages propres à cette invention apparaîtront lors de la description détaillée de l'exemple de réalisation qui va suivre, illustrée par les figures annexées.

La figure 1 est une coupe longitudinale d'un appareil de prise de mesure selon la présente invention, disposé à l'intérieur du tube à contrôler.

La figure 2 représente en coupe longitudinale la liaison entre l'appareil de prise de mesure et l'extérieur.

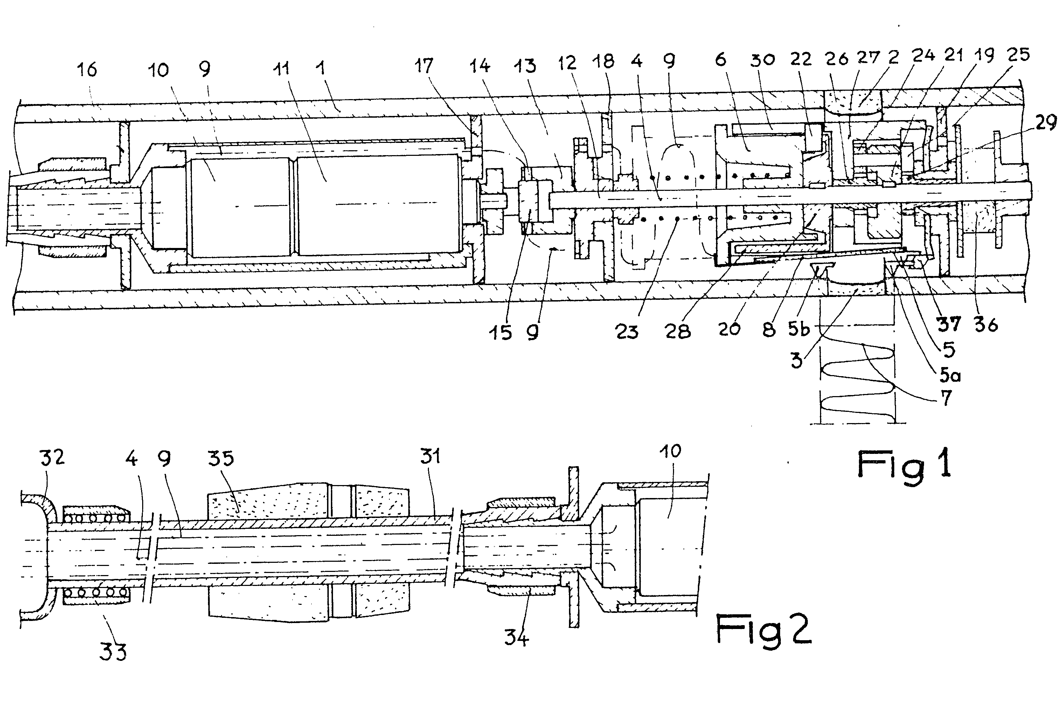

La figure 1 montre d'une façon générale un tube 1 à l'intérieur duquel est disposé un ensemble de mécanismes que nous décrirons par la suite, ce tube 1 étant formé de deux tronçons assemblés bout à bout par soudure. Le cordon de soudure représenté ici forme un anneau qui fait tout le tour du tube et qui peut présenter certains irrégularités de forme. Dans l'exemple de réalisation décrit ici un appareil de prise de mesure est disposé à l'intérieur du tube de façon à analyser la forme de la paroi interne de ce tube au niveau de la soudure 2, 3. C'est dans cette région que peut se produire le plus souvent des défauts. La soudure peut par exemple présenter un bourrelet comme représenté en 2 ou un défourni comme représenté en 3. Le procédé de détermination de la forme de la paroi interne du tube 1 consiste à effectuer un grand nombre de mesures en différents points du tube, dans la région à contrôler, ces mesures consistant à déterminer la distance séparant un point donné de la paroi interne du tube et l'axe 4. Dans l'exemple de réalisation la mesure de cette distance est effectuée à l'aide du palpeur 5 relié à une pièce 6 dont l'axe reste confondu, quel que soit son mouvement, avec l'axe longitudinal 4 du tube. Lors du fonctionnement de l'appareil, la pièce 6 se déplace longitudinalement de façon que le palpeur 5 soit mis continuellement en contact avec la paroi interne du tube 1 en se déplaçant longitudinalement de façon alternative entre les positions extrêmes 5a et 5b. Simultanément à ce mouvement alternatif longitudinal la pièce 6 tourne lentement sur elle-même autor de l'axe 4 et entraîne donc une rotation équivalente du palpeur 5. Pour chacun des déplacements aller ou retour du palpeur entre les positions 5a et 5b, celui-ci tourne d'une faible fraction de tour. En cours de fonctionnement, le palpeur 5 effectue donc un grand nombre d'aller et retour entre les positions 5a et 5b avant d'effectuer un tour complet dans le tube. Si nous effectuons un tracé développé de la face interne du tube, il est possible de représenter, comme cela a été fait sur la figure 1, le chemin 7 que suit le palpeur 5 sur la surface interne du tube et qui peut être approximativement celui d'une sinusoïde d'amplitude égale à la distance séparant les positions longitudinales extrêmes 5a, 5b et de période égale au déplacement angulaire du palpeur lorsque celui-ci a effectué un déplacement longitudinal d'aller et de retour. Le palpeur 5 délivre continuellement un signal représentant la distance qui le sépare de l'axe 4, ce signal est transmis à l'extérieur du tube par l'intermédiaire d'un câble qui s'étend à l'intérieur du tube pour ressortir à l'une de ses extrémités pour être branché sur un appareil de lecture de la mesure donnée par le palpeur 5. Pour obtenir la détermination de la forme de la paroi interne du tube, il faut donc relever les indications de distance fournies par le palpeur en une multitude de points situés sur le chemin 7 que suit ce palpeur, pendant tout le temps que met le palpeur pour effectuer un tour complet à l'intérieur du tube.

Dans l'exemple de réalisation qui est représenté en figure 1, 1a mesure de la distance séparant le palpeur de l'axe 4 s'effectue en réalité à l'aide de la lame piézo-électrique 8 qui relie la pièce mobile 6 au palpeur 5, et qui délivre, d'une façon connue une charge électrique proportionnelle au déplacement de son extrémité qui supporte le palpeur 5 par rapport à la pièce 6. Cette charge électrique est transmise vers l'extérieur par l'intermédiaire d'un câble électrique 9.

Nous allons maintenant décrire le dispositif mécanique qui permet de générer le mouvement complexe de la pièce mobile 6 qui imprime au palpeur 5 son mouvement selon un chemin 7 sensiblement sinusoïdal. Le dispositif comprend pour cela, tout d'abord un moteur 10 qui est accouplé à un réducteur 11 dont l'arbre de sortie qui tourne assez lentement est accouplé à l'arbre 12 par l'intermédiaire d'un joint de cardan classique 13, 14, 15. L'ensemble moteur-réducteur 10, 11 sont maintenus rigidement, lors du fonctionnement de l'appareil, à la fois longitudinalement et angulairement à l'aide des pièces 16, 17, 18, 19 qui forment des supports pour l'ensemble moteurréducteur et pour l'arbre 4 et qui exercent à l'intérieur du tube une friction suffisante pour éviter leur déplacement pendant la mesure. Sur l'arbre rotatif 12 sont montés rigidement deux pièces 20 et 21. La pièce 20 qui est donc entrainée en rotation supporte une came cylindrique 28 qui provoque, lors de sa rotation, le déplacement longitudinal alternatif de la pièce 6 qui comporte une partie qui a une forme complémentaire à la forme de la came 28 de la pièce 20. Par ailleurs, la pièce 21 qui est montée rigidement sur l'arbre rotatif 12 est constitué d'un porte-satellite qui entraîne en rotation les axes des satellites 24 et 25. Ces satellites 24 et 25 sont liés rigidement en rotation. Le satellite 25 est en prise avec une roue dentée fixe 29 et le satellite 24 est en prise avec une roue dentée 26 reliée à une pièce 27. Les roues dentées 29 et 26 ont un nombre de dents légèrement différents, et l'ensemble de train épicycloïdal 24, 25, 26 et 29 fonctionne par conséquent, de façon connue, comme un réducteur dont l'entrée est constituée par le porte-satellite 21 et la sortie, dont le mouvement est réduit, est constituée par la roue dentée 26. La pièce 27 qui tourne donc beaucoup plus lentement que la roue 12 comporte une rainure longitudinale 30 dans laquelle vient s'engager un pion 22 qui est relié à la pièce mobile 6. La pièce mobile 6, outre son mouvement longitudinal alternatif généré par la came 28, tourne donc simultanément à la même vitesse que la pièce 27. Le palpeur 5 qui est relié à la pièce 6 est par conséquent animé du mouvement longitudinal alternatif associé aux mouvements de rotation lente, et suit donc un chemin qui peut s'apparenter à une sinusoïde 7 le long de la paroi interne du tube, en restant toujours en contact avec cette paroi du tube.

Sur la figure 2, on a représenté un ensemble d'éléments qui permettent de faire communiquer l'appareil de prise de mesure avec l'extérieur. L'appareil de mesure est déplacé à l'intérieur du tube 1 à l'aide d'une tige flexible 31 dont la longueur est de préférence supérieure à la longueur du tube. Les extrémités de la tige 31 sont fixées d'une part en 33 sur l'appareil extérieur 32 servant à la lecture et l'interprétation du signal, et d'autre part en 34 sur l'appareil de prise de mesure. Sur toute la longueur du tube flexible 31, il est préférable de fixer des olives de guidage 35 régulièrement espacées. A l'intérieur de la tige flexible 31 on fait passer le câble électrique 9 provenant de la lame piézo-élecrtrique 8 ainsi que divers câbles de commande et de fourniture en énergie électrique pour le moteur 10.

Comme il est difficile de repérer la position exacte de l'appareil de prise de mesure lorsqu'il est introduit dans le tube 1, il est possible d'adapter, sur l'extrémité de l'appareil de prise de mesure, un élément fixe longitudinalement par rapport à l'appareil, permettant de localiser avec précision l'appareil à l'aide d'un détecteur approprié, situé à proximité du tube. Cet élément peut être par exemple un aimant, le détecteur étant alors un détecteur magnétique. Cet élément peut être aussi un élément radio-actif, le détecteur étant alors un détecteur de radio-activité.

Le joint de cardan 13, 14 et 15 permet d'éviter le coincement de l'appareil lors de son enfilage dans le tube au passage des coudes.

L'appareil extérieur 32, servant à la lecture et à l'interprétation des signaux provenant de l'appareil de mesure, peut comprendre, de préférence, essentiellement, un convertisseur analogique-numérique qui transforme le signal, et un ordinateur qui traite les valeurs numériques fournies par le convertisseur. L'ordinateur peut être programmé de façon à donner, à partir de ces valeurs numériques, des informations numériques permettant d'établir, par exemple, le tracé du contour de la face interne du tube, selon différentes sections établies dans des plans longitudinaux ou des plans radiaux par rapport au tube.

L'invention ne se limite pas, en ce qui concerne le dispositif, au mode de réalisation qui vient d'être décrit. On peut par exemple imaginer d'autres dispositifs permettant de générer le mouvement sinusoïdal du palpeur; on peut aussi appliquer cette invention au contrôle de tubes utilisés dans des installations diverses.

**Revendications**

1. Procédé de détermination de la forme de la paroi interne d'un tube (1), notamment au niveau d'une soudure, consistant à disposer dans ce tube (1) un dispositif de mesure (5, 8) de la distance de la paroi interne de ce tube (1) par rapport à l'axe longitudinal (4) dudit tube (1) et à le déplacer par un mouvement selon ledit axe longitudinal (4) et un mouvement de rotation autor de cet axe (4), caractérisé par le fait qu'il consiste à faire effectuer audit dispositif de mesure (5, 8) le mouvement longitudinal sur une distance constante par déplacements aller et retour et à lui faire affecter la rotation par fraction de tour à chaque mouvement aller ou retour.

2. Dispositif de détermination de la forme de la paroi interne d'un tube notamment au niveau d'une soudure, comportant un appareil de prise de mesure qui est susceptible d'être déplacé longitudinalement dans le tube par une tige flexible (31) et est pourvu d'un ensemble moteur (10—11) entrainant en rotation, par un arbre (12), une pièce (6) portant un dispositif de mesure (5, 8) de la distance de la paroi interne par rapport à l'axe longitudinal (4) dudit tube (1) cet appareil de prise de mesure étant relié à un appareil de lecture (32) des mesures situé à l'extérieur du tube, caractérisé par le fait que la dite pièce (6) portant le dispositif de mesure (5, 8) est liée en rotation à la roue dentée de sortie (26) d'un train réducteur (24, 25, 26, 29) comprenant une roue d'entrée (21) fixée sur le dit arbre (12) et est déplacée, selon un mouvement alternatif longitudinal par une came (28) fixée rigidement sur ledit arbre (12).

3. Dispositif selon la revendication 2, caractérisé par le fait que ledit train réducteur (24, 25, 26, 29) est un train épicycloïdal comprenant un porte-satellite (21) relié à l'arbre (6) et constituant la roue d'entrée, deux satellites (24, 25) liés en rotation en engrènant respectivement avec la roue dentée de sortie (26) et une roue dentée (29) fixe en rotation et dont le nombre de dents est différent de celui de ladite roue dentée de sortie (26).

4. Dispositif selon l'une quelconque des revendications 2 ou 3, caractérisé par le fait que la roue dentée de sortie (26) est reliée à une pièce (27) comportant une rainure longitudinale (20) dans laquelle est engagée un pion relié à la pièce (6) portant le dispositif de mesure (5).

5. Dispositif selon l'une quelconque des revendications 2 à 4 caractérisé par le fait que le dispositif de mesure est constitué d'un palpeur (5) relié à ladite pièce mobile (6) par l'intermédiaire d'une lame pièzo-électrique (8) reliée à l'appareil (32) de lecture situé à l'extérieur du tube (1) par l'intermédiaire d'un câble électrique (9).

6. Dispositif selon l'une quelconque des revendications 2 à 5 caractérisé par le fait que la came (28) est de forme cylindrique.

7. Dispositif selon l'une quelconque des revendications 2 à 6 caractérisé par le fait que le moteur réducteur (10, 11) entraîne en rotation l'arbre (12) par l'intermédiaire d'un joint de cardan (13, 14, 15).

8. Dispositif selon l'une quelconque des revendications 2 à 7, caractérisé par le fait que l'appareil de prise de mesure comporte en outre un aimant (36) permettant de localiser avec précision l'appareil de prise de mesure lorsqu'il est introduit dans le tube (1), la localisation s'effectuant à l'aide d'un détecteur magnétique disposé à l'extérieur du tube (1).

**Patentansprüche**

1. Verfahren zur Bestimmung der Form der Innenwand eines Rohres (1), insbesondere bei einer Schweißung, bei welchen eine Vorrichtung (5, 8) zum Messen der Entfernung der Innenwand dieses Rohrs (1) zur Längsachse (4) dieses Rohrs (1) innen in dem Rohr (1) angeordnet und durch Bewegung gemäß der Längsachse (4) und durch Drehbewegung um diese Achse (4) verschoben wird, dadurch gekennzeichnet, daß es darin besteht, dieser Meßvorrichtung (5, 8) die Längsbewegung bei einer konstanten Entfernung durch Hin- und Herverschiebungen und die Drehbewegung durch je eine Teilumdrehung bei jeder Hinoder Herverschiebung ausführen zu lassen.

2. Vorrichtung zur Bestimmung der Form der Innenwand eines Rohrs, insbesondere bei einer Schweißung, bestehend aus einem längs in dem Rohr über einen flexiblen Stab (31) verschiebbaren Meßgerät mit einem Motoraggregat (10, 11) zum drehbeweglichen Antrieb über eine Welle (12) eines Teils (6) das ein Gerät (5, 8) zum Messen der Entfernung der Innenwand zur Längsachse (4) des Rohrs (1) trägt, wobei das Meßgerät an einem außerhalb des Rohrs angeordneten Ablesegerät (32) der Messungen angeschlossen ist, dadurch gekennzeichnet, daß dieses das Meßgerät (5, 8) tragende Teil (6) mit dem Abtriebzahnrad (26) eines Getriebesatzes (24, 25, 26, 29) drehbeweglich verbunden ist, das ein auf dieser Welle (12) befestigtes Antriebsrad (21) aufweist, wobei dieses über eine auf dieser Welle (12) befestigte Nocke (28) gemäß einer abwechselnden Längsbewegung verschoben wird.

3. Vorrichtung nach Anspruch 2, dadurch gekennzeichnet, daß dieser Getriebesatz (24, 25, 26, 29) ein Planetengetriebesatz ist, der aus einem das Antriebsrad bildenden mit der Welle (6) verbundenen Planetenträger (21) besteht, sowie aus zwei drehbeweglich miteinander verbundenen Planetenrädern (24, 25), die jeweils mit dem Abtriebszahnrad (26) und einem drehfesten Zahnrad (29) eingreifen, das eine von der Zahnzahl dieses Abtriebszahnrades abweichende Zahnzahl aufweist.

4. Vorrichtung nach einem der Ansprüche 2 oder 3, dadurch gekennzeichnet, daß das Abtriebszahnrad (26) mit einem Teil (27) verbunden ist, das eine Längsnut (30) zur Aufnahme eines mit dem Tragteil (6) des Meßgerätes (5) verbundenen Zapfens aufweist.

5. Vorrichtung nach einem der Ansprüche 2 bis 4, dadurch gekennzeichnet, daß das Meßgerät aus einem Sensor (5) besteht, der mit diesem beweglichen Teil (6) über einen piezoelektrischen Streifen (8) verbunden ist, der an das außerhalb des Rohrs (1) angeordneten Ablesegerät (32) über eine elektrische Leitung (9) angeschlossen ist.

6. Vorrichtung nach einem der Ansprüche 2 bis 5, dadurch gekennzeichnet, daß die Nocke (28) zylindrisch ausgebildet ist.

7. Vorrichtung nach einem der Ansprüche 2 bis 6, dadurch gekennzeichnet, daß der Getriebemotor (10, 11) über ein Kardangelenk (13, 14, 15) die Welle (12) drehbeweglich antreibt.

8. Vorrichtung nach einem der Ansprüche 2 bis 7, dadurch gekennzeichnet, daß das Meßgerät außerdem ein Magnet (36) zur genauen Lokalisierung des Meßgerätes in dem Rohr (1) aufweist, wobei die Lokalisierung mit Hilfe eines außen an dem Rohr (1) befindlichen Magnetdetektors erfolgt.

## Claims

1. Method for determining the shape of the internal wall of a tube (1), in particular in the region of a weld, consisting in arranging in this tube (1) a device (5, 8) for measuring the distance of the internal wall of this tube (1) relative to the longitudinal axis (4) of the said tube (1) and in displacing it by a movement along the said longitudinal axis (4) and a rotational movement about this axis (4), characterised in that it consists in making the said measuring device (5, 8) perform the longitudinal movement over a constant distance by forward and backward displacement and in making it perform rotation by a fraction of a revolution for each forward or backward movement.

2. A device for determining the shape of the internal wall of a tube, in particular in the region of a weld, comprising an apparatus for taking measurements which is capable of being displaced longitudinally in the tube by a flexible rod (31) and is provided with a drive unit (10, 11) driving in rotation, via a shaft (12), a part (6) carrying a device (5, 8) for measuring the distance of the internal wall relative to the longitudinal axis (4) of the said tube (1), this apparatus for taking measurements being connected to an instrument (32) for reading the measurements, located on the outside of the tube, characterised in that the said part (6) carrying the measuring device (5, 8) is linked in rotation with the toothed output wheel (26) of a speed-reducing gear train (24, 25, 26, 29) comprising an input wheel (21) fixed to the said shaft (12) and is displaced, in accordance with a longitudinal alternating movement, by a cam (28) which is integrally fixed to the said shaft (12).

3. Device according to Claim 2, characterised in that the said speed-reducing gear train (24, 25, 26, 29) is an epicycloidal gear train comprising a planet-wheel carrier (21) connected to the shaft (6) and constituting the input wheel, two planet wheels (24, 25) which are linked in rotation and mesh respectively with the toothed output wheel (26) and a toothed wheel (29) which is locked in rotation and has a different number of teeth from that of the said toothed output wheel (26).

4. Device according to either of Claim 2 or 3, characterised in that the toothed output wheel (26) is connected to a part (27) with a longitudinal groove (30) into which a pin engages, the said pin being connected to the part (6) carrying the measuring device (5).

5. Device according to any one of Claims 2 to 4, characterised in that the measuring device consists of a sensor (5) connected to the said mobile part (6) by means of a piezoelectric blade (8) connected to the reading instrument (32), located outside the tube (1), by means of an electric cable (9).

6. Device according to any one of Claims 2 to 5, characterised in that the cam (28) is cylindrical in shape.

7. Device according to any one of Claims 2 to 6, characterised in that the geared motor (10, 11) drives in rotation the shaft (12) by means of a universal joint (13, 14, 15).

8. Device according to any one of Claims 2 to 7, characterised in that the apparatus for taking measurements also has a magnet (36), by means of which it is possible to locate accurately the apparatus for taking measurement when it is introduced inside the tube (1), locating being performed with the aid of a magnetic detector arranged outside the tube (1).

Fig 1

Fig 2

0 077 730